# EUROPÄISCHE PATENTSCHRIFT

(11) **EP 3 073 157 B1**
(45) Veröffentlichungstag und Bekanntmachung des Hinweises auf die Patenterteilung: **07.04.2021**
(21) Anmeldenummer: 16150426.1
(22) Anmeldetag: 07.01.2016
(51) Int. Cl.: F16H 61/4174, F15B 21/044, B60K 17/10, B60K 17/30, B60K 17/356, B66F 9/065, B66F 9/075, E02F 3/28, E02F 9/08, E02F 9/22

(54) **HYDRAULIKSYSTEM MIT ÖLENTLÜFTUNG**
HYDRAULIC SYSTEM WITH OIL VENTILATION
SYSTEME HYDRAULIQUE AVEC SYSTÈME DE DÉSARÉATION DE L'HUILE

(30) Priorität: 27.03.2015 DE 102015104761
(43) Veröffentlichungstag der Anmeldung: 28.09.2016
(73) Patentinhaber: CLAAS Selbstfahrende Erntemaschinen GmbH, 33428 Harsewinkel (DE)
(72) Erfinder: Dückingaus, Heinrich, 33649 Bielefeld (DE); Wiefel, Markus, 48361 Beelen (DE)
(74) Vertreter: CLAAS Gruppe

(56) Entgegenhaltungen:
- EP-A2- 0 949 187
- CH-A- 350 849
- DE-A1-102013 210 417
- US-A- 1 164 105
- US-A- 2 515 288

## Beschreibung

Die Erfindung betrifft ein hydraulisches System nach dem Oberbegriff des Anspruchs 1 und eine Verwendung eines solchen Systems in einer mobilen Arbeitsmaschine mit zumindest einem längenveränderlichen Hubarm.

Aus der CH 350 849 A ist eine Vorrichtung zur Entgasung der Druckflüssigkeit eines Flüssigkeitsmotors, insbesondere einen Hydraulikmotor aufweisenden hydraulischen Kraftanlagen bekannt.

Verladefahrzeuge sind unter anderem aus der GB 2161784 bekannt geworden. Das als sogenannter Teleskoplader ausgeführte Verladefahrzeug umfasst einen quer zur Längsrichtung des Verladefahrzeugs positionierten Antriebsmotor, der in einem der Fahrerkabine gegenüberliegenden Bereich einem in Längsrichtung des Verladefahrzeugs weisenden Tragrahmen zugeordnet ist. Die Abtriebswelle des Antriebsmotors erstreckt sich über diese Längsträgerstruktur hinweg in den fahrerkabinenseitigen Bereich und nimmt endseitig eine Hydraulikpumpe auf, die über ein Leitungssystem mit einem in den Antriebsstrang des Front- und Heckfahrwerks integrierten Hydraulikmotor verbunden ist. Der Hydraulikmotor ist dabei so ausgeführt, dass er sowohl die das Frontfahrwerk bildende Frontachse als auch die das Heckfahrwerk bildende Hinterachse antreibt und von dem Längsträger zum Schutz vor Bodenkontakt gekapselt ist. Derartige Ausführungen haben insbesondere die Nachteile, dass einerseits die sich kreuzenden Antriebsstränge einen erheblichen Bauraumbedarf erfordern, der die Bodenfreiheit sowie eine optimale Schwerpunktlage erheblich beeinträchtigt und andererseits der geringe Abstand der in vertikaler Richtung näher am Boden angeordneten Getriebe-Hydraulikmotoreinheit nur eine begrenzte Größe und damit begrenzte Antriebsleistungen zulässt.

Zur Realisierung einer kompakten Bauweise ist es zudem gemäß der EP 0 949 187 bekannt eine Motor-Getriebe-Einheit oberhalb von die Fahrwerke miteinander verbindenden Gelenkwellen anzuordnen. Indem hier eine Vielzahl von Gelenkwellen zur Energieübertragung eingesetzt werden, kann zumindest eine bessere Ausnutzung des vorhandenen Bauraumes zur Integration der Antriebseinheit erreicht werden. Nachteilig bei derartigen Ausführungen ist jedoch, dass wegen der Vielzahl von eingesetzten Gelenkwellen eine sehr aufwendige und damit auch kostenintensive Energieübertragung zwischen Vorder- und Hinterachse realisiert wird, die zudem noch wegen der fehlenden Kapselung starkem Verschleiß aufgrund von Verschmutzung oder Bodenkontakt ausgesetzt sind.

Die in derartigen Verladefahrzeuge, wie im Übrigen auch in Traktoren und sonstigen mobilen Arbeitsmaschinen eingesetzten Hydrauliksysteme umfassen - neben anderen Komponenten - mindestens eine Hydraulikpumpe, einen Sumpf oder ein Hydraulikreservoir/-tank, hydraulische Funktionen, wie beispielsweise Aktuatoren oder Zylinder, und Ventileinrichtungen bzw. Steuerventile, welche die Kommunikation zwischen der Hydraulikpumpe, dem Sumpf und der hydraulischen Funktion steuern. Hydraulikreservoirs oder Tanks wurden verwendet, um Öl oder Hydraulikflüssigkeit zu speichern und der Hydraulikflüssigkeit Zeit zum Entschäumen, Entlüften bzw. Entgasen der Hydraulikflüssigkeit zu geben. Wenn die Flüssigkeit nicht in ausreichender Weise entlüftet wird, ist die Hydraulikpumpe anfällig für Kavitationsschäden und Ausfälle. Mit Luft oder Gas versetzte Hydraulikflüssigkeit in einem Hydrauliksystem kann Geräusche verursachen, eine sprunghafte Wirkungsweise der hydraulischen Funktion bewirken, Wärmebildung verursachen und eine verringerte Lebensdauer der Komponenten zur Folge haben. So kann es beispielsweise in einigen Hydrauliksystemen von Traktoren oder Ladefahrzeugen vorkommen, dass Hydraulikflüssigkeit zumindest teilweise zerstäubt wird, wenn sie mit einer übermäßigen Geschwindigkeit aus einem Steuerventilauslass ausfließt, wenn die Hydraulikflüssigkeit zurück zum Sumpf fließt bzw. mit dem Sumpf in kommunizierender Verbindung steht. Dies bewirkt, dass die Hydraulikflüssigkeit in dem Sumpf mit Luft vermischt oder aufgeschäumt ist.

Üblicher Weise sind die Hydrauliksysteme der Fahrantriebe mobiler Arbeitsmaschinen zudem vollständig mit Hydraulikflüssigkeit gefüllt, sodass auf diese Weise der bekannten Schaumbildung entgegengewirkt wird. Zur Verbesserung des Wirkungsgrades derartiger Hydrauliksysteme sollen die Gehäuse der Hydrostatik-Komponenten nicht mit Hydrauliköl gefüllt sein, damit das den Wirkungsgrad verschlechternde sogenannte Planschen verhindert wird.

Es ist deshalb Aufgabe der Erfindung, die beschriebenen Nachteile des Standes der Technik zu vermeiden und insbesondere ein wirkungsvolles, eine einfache Struktur aufweisendes Ölentlüftungssystem zu schaffen welches in eine kompakte, eine optimale Schwerpunktlage aufweisende und einen hohe Antriebsleitungen übertragenden Antriebsstrang umfassende mobile Arbeitsmaschine integrierbar ist.

Diese Aufgabe wird erfindungsgemäß durch die kennzeichnenden Merkmale des Anspruchs 1 sowie durch die Verwendung gemäß Anspruch 13 gelöst.

Indem ein hydraulisches System, welches eine Entlüftungsvorrichtung zur Entlüftung einer Hydraulikflüssigkeit des hydraulischen Systems umfasst, wobei das hydraulische System zumindest eine Hydraulikmotoranordnung einer mobilen Arbeitsmaschine und einen mit dieser Hydraulikmotoranordnung hydraulisch gekoppelten Hydraulikflüssigkeitsspeicher umfasst, so beschaffen ist, dass der zumindest einen Hydraulikmotoranordnung eine Absaugeinrichtung zur Absaugung der Hydraulikflüssigkeit in der Weise zugeordnet ist, dass die Absaugeinrichtung mittels Unterdruck Hydraulikflüssigkeit aus der Hydraulikmotoranordnung in den Hydraulikflüssigkeitsspeicher abführt, wird sichergestellt, dass auch bei schnelllaufenden Hydraulikmotoranordnungen eine zufriedenstellende Ölentlüftung erreicht wird.

Dabei wird eine an beliebige Fahrsituationen angepasste Ölabsaugung erreicht, indem die Absaugung der Hydraulikflüssigkeit mittels Unterdruck unabhängig von der Drehrichtung der Hydraulikmotoranordnung und damit unabhängig von der Fahrtrichtung einer die Hydraulikmotoranordnung umfassenden mobilen Arbeitsmaschine ist.

Ein konstruktiv einfach und kompakt ausgeführte Luftansaugung lässt sich dann realisieren, wenn die Hydraulikmotoranordnung über eine Luftansaugleitung mit einer in den Hydraulikflüssigkeitsspeicher integrierten Luftansaugeinrichtung verbunden ist. Der gleiche Effekt ergibt sich, wenn gemäß einer weiteren vorteilhaften Ausgestaltung der Erfindung die Luftansaugeinrichtung als Luftansaugrohr ausgeführt und in dem Hydraulikflüssigkeitsspeicher in vertikaler Richtung geneigt positioniert ist.

Die Realisierung des erfindungsgemäßen Unterdrucks lässt sich auf konstruktive einfache Weise dadurch realisieren, dass die Luftansaugleitung ein Rückschlagventil umfasst, dessen Durchlass in Abhängigkeit von einem definierten Unterdruck in der Hydraulikmotoranordnung freigegeben wird. In einer bevorzugten Ausgestaltung steht das Rückschlagventil unter Federvorspannung, die einen Öffnungsdruck von bis zu 1 bar, vorzugsweise 0,6 bar erfordert. In diesem Unterdruckbereich verbinden sich in der Hydraulikflüssigkeit enthaltene Bläschen geringer Größe sehr effektiv zu größeren Luftblasen, die sich schließlich effizienter und einfacher aus der Hydraulikflüssigkeit abscheiden lassen.

Der Unterdruck im Gehäuse der Hydromotoranordnung wird dadurch erzeugt, dass die Absaugeinrichtung zumindest eine in eine Absaugleitung integrierte Hydraulikpumpe umfasst, deren Eingangswelle über eine Getriebestufe mit der Abtriebswelle der Hydraulikmotoranordnung mechanisch gekoppelt ist.

Eine fahrtrichtungsunabhängige Arbeitsweise der mit Unterdruck arbeitenden erfindungsgemäßen Absaugeinrichtung wird in einer vorteilhaften Ausgestaltung der Erfindung dadurch erreicht, dass die Hydraulikpumpe in der Weise in die Absaugleitung integriert ist, dass der Zu- und Ablaufseite der Hydraulikpumpe jeweils ein Rückschlagventil zugeordnet ist, wobei die Rückschlagventile in Parallelschaltung mit einem Wechselventil verbunden sind und das Wechselventil den Zugang zum Hydraulikflüssigkeitsspeicher freigibt oder verschließt.

Eine effiziente und bauraumsparende Entmischung von Luftblasen und Hydraulikflüssigkeit wird in einer vorteilhaften Weiterbildung der Erfindung dann erreicht, wenn die Absaugleitung mit einem in den Hydraulikflüssigkeitsspeicher integrierten Auslassrohr gekoppelt ist und wobei das Auslassrohr in dem Hydraulikflüssigkeitsspeicher in vertikaler Richtung geneigt angeordnet ist. Diese Effekte werden dann noch verstärkt, wenn das Auslassrohr Öffnungen zum Durchtritt der Hydraulikflüssigkeit und obenseitig eine Luftaustrittsöffnung aufweist.

Eine Koppelung der Entlüftungseffekte mit Reinigungseffekten lässt sich in einer vorteilhaften Ausgestaltung der Erfindung im einfachsten Fall dadurch erreichen, dass der Absaugleitung im Bereich zwischen Hydraulikmotoranordnung und Hydraulikpumpe der Absaugeinrichtung eine Filtereinrichtung zugeordnet ist und der Hydraulikflüssigkeitsspeicher geschlossen ausgeführt ist und eine Luftaus- und -eintrittsöffnung umfasst.

Der beim Einsatz von hydraulischen Antriebsorganen mit hoher Antriebsleistung auftretenden verstärkten Aufschäumung der Hydraulikflüssigkeit, wie dies etwa in mobilen Arbeitsmaschine der Fall ist, kann in einer vorteilhaften Ausgestaltung der Erfindung dadurch bewirkt werden, dass die Vorrichtung zur Entlüftung einer Hydraulikflüssigkeit eines hydraulischen Systems nach einem der Ansprüche 1 bis 12 in einer derartigen mobilen Arbeitsmaschine verwendet wird.

Indem in einer vorteilhaften Ausgestaltung des Verladefahrzeugs der Antriebsmotor und das wenigstens eine Zentralgetriebe in Längsrichtung des Verladefahrzeugs gestaffelt zueinander und wechselseitig zum Antriebsstrang der Fahrwerke der Tragstruktur zugeordnet sind und der Antriebsmotor und eine diesem zugeordnete Fahrpumpe eine gemeinsame Antriebseinheit bilden und sich diese Antriebseinheit zumindest teilweise über den Antriebsstrang erstreckt und das Zentralgetriebe in der Weise in den Antriebsstrang integriert ist, dass es diesen zumindest teilweise überdeckt, wird erreicht, dass der Antriebsstrang eine kompakte Bauform aufweist, der eine optimale Schwerpunktlage des Verladefahrzeugs ermöglicht und zugleich den Einsatz größerer Antriebsaggregate zur Generierung und Übertragung großer Antriebsleistungen zulässt.

In vorteilhafter Weiterbildung kann die erfindungsgemäße Antriebsstruktur in Teleskopladern, Gabelstaplern und Radladern zum Einsatz kommen.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine Seitenansicht des erfindungsgemäßen Verladefahrzeugs
- Figur 2: eine Ansicht von unten des erfindungsgemäßen Verladefahrzeugs nach Figur 1
- Figur 3: eine schematische Detailansicht der erfindungsgemäßen Entlüftungsvorrichtung

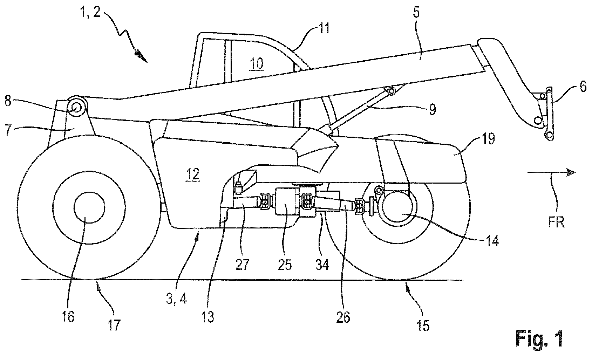

Figur 1 zeigt schematisch das als Teleskoplader 2 ausgeführte Verladefahrzeug 1. In an sich bekannter Weise nimmt die als Tragrahmen 3 ausgeführte Tragstruktur 4 in zentraler Position einen teleskopierbaren Hubarm 5 auf, dem frontseitig ein an sich bekannter Werkzeugadapter 6 zugeordnet ist. Der Hubarm 5 wird in seinem rückwärtigen Bereich von zumindest einer in Stützflanschen 7 quer zur Fahrtrichtung FR angeordneten Schwenkachse 8 schwenkbeweglich gelagert und wobei zur Realisierung der Schwenkbewegung dem Hubarm 5 untenseitig ein oder mehrere Hubzylinder 9 zugeordnet sind, die durch Druckbeaufschlagung oder Druckentlastung das Verschwenken des Hubarms 5 um die besagte Schwenkachse 8 ermöglichen. Das teleskopartige Ein- und Ausfahren des Hubarms 5 wird in an sich bekannter und deshalb nicht näher dargestellter Weise mittels weitere Hubzylinder realisiert. Der teleskopierbare Hubarm 5 unterteilt aufgrund seiner zentralen Anordnung das Verladefahrzeug 1 in einen kabinenseitigen Bereich 10 in dem die Fahrerkabine 11 dem Tragrahmen 3 zugeordnet ist und einen antriebsseitigen Bereich 12 in dem der Antriebsmotor 13 von dem Tragrahmen 3 aufgenommen wird. Zudem nimmt der Tragrahmen 3 in an sich bekannter Weise ein von einer Vorderachse 14 gebildetes Frontfahrwerk 15 und ein von einer Hinterachse 16 gebildetes Heckfahrwerk 17 auf.

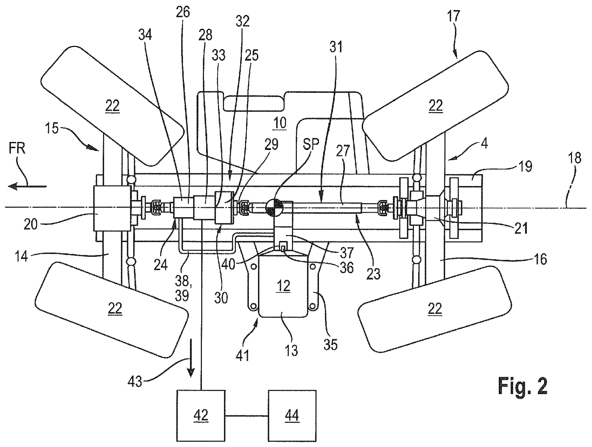

Gemäß Figur 2 umfasst die Tragstruktur 4 einen sich in Längsrichtung 18 des Verladefahrzeugs 1 erstreckenden Längsträger 19 an dem das Frontfahrwerk 15 und das Heckfahrwerk 17 befestigt sind. In dem dargestellten Ausführungsbeispiel nimmt sowohl die Vorderachse 14 als auch die Hinterachse 16 jeweils ein sogenanntes Differentialgetriebe 20, 21, welches entweder entsperrbar oder starr ausgeführt ist, zum Antrieb der Laufräder 22 auf. Jedes der Differentialgetriebe 20, 21 ist in erfindungsgemäßer Weise über mechanische Teilantriebsstränge 23, 24 mit einem Zentralgetriebe 25 gekoppelt. Die Teilantriebsstränge 23, 24 können im einfachsten Fall als an sich bekannte Gelenkwellen 26, 27 ausgeführt sein. Es liegt im Rahmen der Erfindung, dass die Teilantriebsstränge 23, 24 auch hydraulische Komponenten zur Übertragung der Antriebsenergie umfassen können. Das Zentralgetriebe 25 verfügt im dargestellten Ausführungsbeispiel über zwei in Fahrzeuglängsrichtung 18 weisende Abtriebswellen, 28, 29 die mit der jeweiligen Gelenkwelle 26, 27 antriebsverbunden sind. Das Zentralgetriebe 25 ist zudem so in die Tragstruktur 4 integriert, dass sein abtriebsseitiger Bereich 30 im wesentlichen in den von den Teilantriebssträngen 23, 24 gebildeten Antriebsstrang 31 der Fahrwerke 15, 17 integriert ist. Der antriebsseitige Bereich 32 des Zentralgetriebes 25 umfasst wenigstens eine Eingangswelle 33 die ebenfalls in Fahrzeuglängsrichtung 18 ausgerichtet ist. Damit ergibt sich für das Zentralgetriebe 25 eine Anordnung bei der die Eingangs- und Ausgangswellen 28, 29, 33 in Fahrzeuglängsrichtung 18 weisen und zueinander quer zur Fahrzeuglängsrichtung 18 versetzt sind.

Auf die Eingangswelle 33 des Zentralgetriebes 25 ist ein Hydraulikmotor 34 zum Antrieb des Zentralgetriebes 25 aufgesetzt. In an sich bekannter und deshalb nicht dargestellter Weise wird der Hydraulikmotor 34 über Schraubverbindungen an das Zentralgetriebe 25 angeflanscht. Zur optimalen Ausnutzung vorhandener Freiräume an dem Verladefahrzeug 1 ist das Zentralgetriebe 25 in dem kabinenseitigen Bereich 10 wenigstens teilweise unterhalb der Fahrerkabine 11 und nahe der Vorderachse 14 an der Tragstruktur 4 fixiert. Zur Reduzierung der Verschmutzung und zur Vermeidung von Bodenkontakt werden der Antriebsstrang 31 sowie das Zentralgetriebe 25 wenigstens teilweise von dem Längsträger 19 des Tragrahmens 3 gekapselt. Es liegt im Rahmen der Erfindung, dass der Antriebsstrang 31 und das Zentralgetriebe 25 auch vollständig von dem Längsträger 19 ummantelt sein können. In diesem Fall tritt nahezu kein verschmutzungs- und kollisionsbedingte Verschleiß auf.

In erfindungsgemäßer Weise nimmt die Tragstruktur 4 zudem den Antriebsmotor 13 auf, der im dargestellten Ausführungsbeispiel über einen Stützrahmen 35 an dem Längsträger 19 des Tragrahmens 3 abgestützt wird. Der Antriebsmotor 13 nimmt eine nahezu mittige Position zwischen den Fahrwerken 15, 17 des Teleskopladers 2 ein. Zugleich ist er in Längsrichtung 18 des Teleskopladers 2 versetzt zum Zentralgetriebe 25 in dem antriebsseitigen Bereich 12 des Teleskopladers 2 angeordnet. Auf diese Weise sind das Zentralgetriebe 25 und der Antriebsmotor 13 dem Antriebsstrang 31 der Fahrwerke 15, 17 wechselseitig zugeordnet. Dies hat insbesondere den Vorteil, dass die Antriebsaggregate 25, 13 nahe am Längsträger 19 des Tragrahmens 3 angeordnet werden können, sodass sich eine nahezu zentrale Lage des Schwerpunktes SP zwischen den Fahrwerken 15, 17 und damit eine große Fahrstabilität ergibt. Die Einbaulage des Antriebsmotors 13 erstreckt sich quer zur Längsrichtung 18 des Teleskopladers 2, sodass die Abtriebswelle 36 in Richtung des Antriebsstranges 31 der Fahrwerke 15,17 weist. Die Abtriebswelle 36 des Antriebsmotors 13 nimmt in erfindungsgemäßer Weise eine Hydraulikpumpe 37 auf, die einfachstenfalls mittels Schraubverbindungen am Antriebsmotor 13 angeflanscht ist und über die Abtriebswelle 36 und einen der Hydraulikpumpe 37 zugeordneten Antriebsstutzen 40 von dem Antriebsmotor 13 angetrieben wird. Die Hydraulikpumpe 37 des Antriebsmotors 13 und der Hydraulikmotor 34 des Zentralgetriebes 25 sind über ein Leitungssystem 38 zur Übertragung des Hydraulikmediums miteinander verbunden. Zur Erreichung einer hohen Flexibilität bei der Anordnung der verschiedenen Antriebsaggregate 13, 25, 34, 37 besteht das Leitungssystem 38 in vorteilhafter Weise aus Schlauchleitungen 39. Zur Erreichung einer niedrigen Lage des Schwerpunktes SP ist es von Vorteil, wenn die Antriebsaggregate 13, 25, 34, 37 unterhalb des Längsträgers 19 angeordnet sind. Indem die von dem Antriebsmotor 13 und der zugeordneten Hydraulikpumpe 37 gebildete Antriebseinheit 41 erfindungsgemäß so in dem antriebsseitigen Bereich 12 angeordnet ist, dass sich die Antriebseinheit 41 zumindest teilweise in den Bereich des Antriebsstranges 31 der Fahrwerke 15, 17 erstreckt, wird eine kompakte Ausführung der gesamten Antriebsstruktur des Verladefahrzeugs ermöglicht, die zudem sicherstellt, dass die zulässigen Außenabmessungen der mobilen Arbeitsmaschine (X) nicht überschritten werden. Der mit dem Zentralgetriebe 25 gekoppelten Hydraulikmotoranordnung 34 ist zudem die erfindungsgemäße Absaugeinrichtung 42 zugeordnet, die in noch näher zu beschreibender Weise mittels Unterdruck Hydraulikflüssigkeit 43 aus der Hydraulikmotoranordnung 34 in einen Hydraulikflüssigkeitsspeicher 44 abführt.

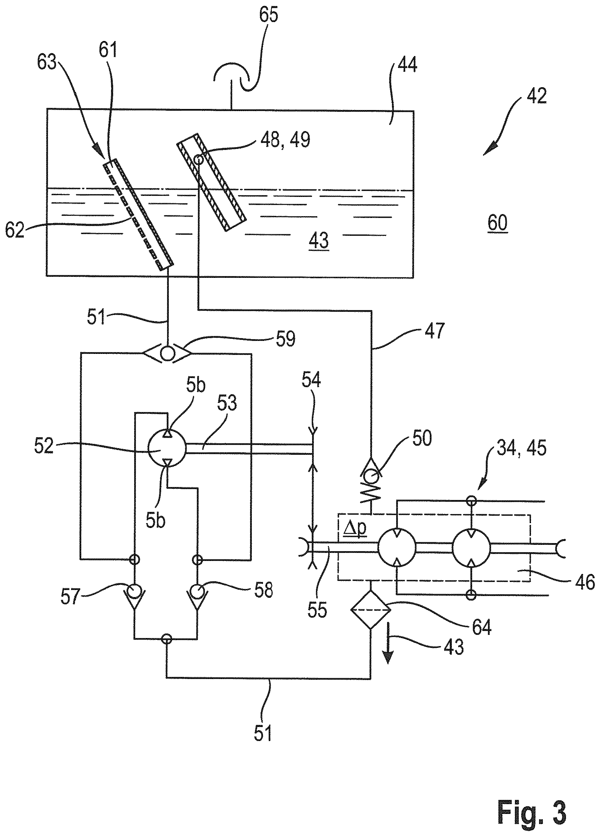

Figur 3 zeigt nun die erfindungsgemäße Absaugeinrichtung 42 im Detail. Die als Doppelmotor 45 ausgeführte Hydraulikmotoranordnung 34 ist in ein Gehäuse 46 integriert. Über eine Luftansaugleitung 47 ist das Gehäuse 46 mit dem Hydraulikflüssigkeitsspeicher 44 verbunden. Der Hydraulikflüssigkeitsspeicher 44 ist nur teilwiese mit Hydraulikflüssigkeit 43 gefüllt, sodass eine der Luftansaugleitung 47 zugeordnete Luftansaugeinrichtung 48 im Inneren des Hydraulikflüssigkeitsspeichers 44 oberhalb des Hydraulikflüssigkeitspegels positioniert sein kann. In einer Ausgestaltung kann die Luftansaugeinrichtung 48 als Luftansaugrohr 49 ausgeführt und in dem Hydraulikflüssigkeitsspeicher 44 in vertikaler Richtung geneigt positioniert sein. Anderenends mündet die Luftansaugleitung 47 in ein dem Gehäuse 46 der Hydraulikmotoranordnung 34 zugeordnetes Rückschlagventil 50, dessen Durchlass in Abhängigkeit von einem definierten Unterdruck im Gehäuse 46 freigegeben wird. Das Rückschlagventil 50 steht unter Federvorspannung und realisiert einen Öffnungsdruck von bis zu 1 bar, vorzugsweise 0,6 bar.

Erfindungsgemäß ist der Absaugeinrichtung 42 zur Generierung des Unterdrucks Δp im Gehäuse 46 der Hydraulikmotoranordnung 34 zumindest eine in eine Absaugleitung 51 integrierte Hydraulikpumpe 52 zugeordnet, deren Eingangswelle 53 über eine Getriebestufe 54 mit der Abtriebswelle 55 der Hydraulikmotoranordnung 34 mechanisch gekoppelt ist. Es liegt im Rahmen der Erfindung, dass die Getriebestufe 54 als Räder- oder Riementrieb ausgeführt sein kann. Die Hydraulikpumpe 52 ist in der Weise in die Absaugleitung 51 integriert, dass der Zu- und Ablaufseite 56 der Hydraulikpumpe 52 jeweils ein Rückschlagventil 57, 58 zugeordnet ist, wobei die Rückschlagventile 57, 58 in Parallelschaltung mit einem Wechselventil 59 verbunden sind und das Wechselventil 59 den Zugang zum Hydraulikflüssigkeitsspeicher 44 freigibt oder verschließt. Die Positionierung der Rückschlagventile 57, 58 in dem zwischen der Hydraulikmotoranordnung 34 und der Hydraulikpumpe 52 liegenden Abschnitt der Absaugleitung 51 hat den Zweck, dass unabhängig von der Drehrichtung der Abtriebswelle 55 des Doppelmotors 45 stets eine Absaugung von Hydraulikflüssigkeit 43 aus dem Gehäuse 46 des Doppelmotors 45 sichergestellt ist. Damit wird sowohl bei Vorwärts- als auch Rückwärtsfahrt der mobilen Arbeitsmaschine 60 eine Absaugung von Hydraulikflüssigkeit 43 aus dem Gehäuse 46 bei Unterdruck realisiert. Zugleich ist sichergestellt, dass bei Stillstand der mobilen Arbeitsmaschine keine Absaugung von Hydraulikflüssigkeit 43 erfolgt, da in diesem Fall die Abtriebswelle 55 des Doppelmotors 45 stillsteht. Fällt die Hydraulikpumpe 52 aus, etwa wegen eines Defektes der Getriebestufe 54, ermöglichen die beschriebenen Rückschlagventile 57, 58 im Zusammenwirken mit dem Wechselventil 59 dennoch einen Rückfluss von Hydraulikflüssigkeit 43 aus dem Gehäuse 46 des Doppelmotors 45 zum Hydraulikflüssigkeitsspeicher 44. Die in den Hydraulikflüssigkeitsspeicher 44 mündende Absaugleitung ist an ihrem speicherseitigen Ende mit einem Auslassrohr 61 gekoppelt, welches in dem Hydraulikflüssigkeitsspeicher 44 in vertikaler Richtung geneigt angeordnet ist. Das Auslassrohr 61 verfügt über Öffnungen 62 durch die die abgesaugte Hydraulikflüssigkeit 43 in den Hydraulikflüssigkeitsspeicher 44 austreten kann. Obenseitig verfügt das Auslassrohr 61 über eine weiter Öffnung 63 durch die die in dem Öl gebundenen Luftblasen abgeschieden werden können. Indem das Gehäuse 46 der Hydraulikmotoranordnung 34 im Betrieb der mobilen Arbeitsmaschine 60 permanent unter Unterdruck Δp steht wird in einem ersten Schritt sichergestellt, dass sich die in der aufgeschäumten Hydraulikflüssigkeit 43 eingeschlossenen Luftbläschen zu größeren Luftblasen verbinden, die sich dann in einem weiteren Schritt, nämlich beim Durchlaufen des Auslassrohres 61 einfacher von der Hydraulikflüssigkeit 43 trennen und abscheiden lassen. Dies Entlüftungseffekt ist besonders bei schnelllaufenden Hydraulikmotoranordnungen von besonderer Bedeutung, da diese verstärkt zum

Um neben der Entlüftung der abzusaugenden Hydraulikflüssigkeit 43 auch deren Reinigung zu ermöglichen, ist der Absaugleitung 51 im Bereich zwischen Hydraulikmotoranordnung 34 und Hydraulikpumpe 52 der Absaugeinrichtung 42 eine Filtereinrichtung 64 zugeordnet. In an sich bekannter Weise ist der Hydraulikflüssigkeitsspeicher 44 geschlossen ausgeführt und umfasst eine Luftein- und -auslassöffnung 65.

**Bezugszeichenliste:**

| | | | |
|---|---|---|---|
| 1 | Verladefahrzeug | 33 | Eingangswelle |
| 2 | Teleskoplader | 34 | Hydraulikmotoranordnung |
| 3 | Tragrahmen | 35 | Stützrahmen |
| 4 | Tragstruktur | 36 | Abtriebswelle |
| 5 | Hubarm | 37 | Hydraulikpumpe |
| 6 | Werkzeugadapter | 38 | Leitungssystem |
| 7 | Stützflansch | 39 | Schlauchleitungen |
| 8 | Schwenkachse | 40 | Antriebsstutzen |
| 9 | Hubzylinder | 41 | Antriebseinheit |
| 10 | kabinenseitiger Bereich | 42 | Absaugeinrichtung |
| 11 | Fahrerkabine | 43 | Hydraulikflüssigkeit |
| 12 | antriebsseitiger Bereich | 44 | Hydraulikflüssigkeitsspeicher |
| 13 | Antriebsmotor | 45 | Doppelmotor |
| 14 | Vorderachse | 46 | Gehäuse |
| 15 | Frontfahrwerk | 47 | Luftansaugleitung |
| 16 | Hinterachse | 48 | Luftansaugeinrichtung |
| 17 | Heckfahrwerk | 49 | Luftansaugrohr |
| 18 | Längsrichtung | 50 | Rückschlagventil |
| 19 | Längsträger | 51 | Absaufleitung |
| 20 | Differentialgetriebe | 52 | Hydraulikpumpe |
| 21 | Differentialgetriebe | 53 | Eingangswelle |
| 22 | Laufräder | 54 | Getriebestufe |
| 23 | Teilantriebsstrang | 55 | Abtriebswelle |
| 24 | Teilantriebsstrang | 56 | Zu-/Ablauf Pumpe |
| 25 | Zentralgetriebe | 57 | Rückschlagventil |
| 26 | Gelenkwelle | 58 | Rückschlagventil |
| 27 | Gelenkwelle | 59 | Wechselventil |
| 28 | Abtriebswelle | 60 | Mobile Arbeitsmaschine |
| 29 | Abtriebswelle | 61 | Auslassrohr |
| 30 | Bereich | 62 | Öffnungen |
| 31 | Antriebsstrang | 63 | Luftaustrittsöffnung |
| 32 | Bereich | 64 | Filtereinrichtung |
| 65 | Luftein-und -auslassöffnung | | |
| FR | Fahrtrichtung | | |
| SP | Schwerpunkt | | |
| Δp | Unterdruck | | |

## Patentansprüche

1. Hydraulisches System, umfassend eine Entlüftungsvorrichtung zur Entlüftung einer Hydraulikflüssigkeit (43) aus dem hydraulischen System, wobei das hydraulische System zumindest eine Hydraulikmotoranordnung (34) einer mobilen Arbeitsmaschinen (60) und einen mit dieser Hydraulikmotoranordnung (34) hydraulisch gekoppelten Hydraulikflüssigkeitsspeicher (44) umfasst,
**dadurch gekennzeichnet,**
**dass** der zumindest einen Hydraulikmotoranordnung (34) eine Absaugeinrichtung (42) zur Absaugung der Hydraulikflüssigkeit (43) in der Weise zugeordnet ist, dass die Absaugeinrichtung (42) mittels Unterdruck (Δp) Hydraulikflüssigkeit (43) aus der Hydraulikmotoranordnung (34) in den Hydraulikflüssigkeitsspeicher (44) abführt, und wobei die Absaugung der Hydraulikflüssigkeit (43) mittels Unterdruck (Δp) unabhängig von der Drehrichtung der Hydraulikmotoranordnung (34) und damit unabhängig von der Fahrtrichtung der die Hydraulikmotoranordnung (34) umfassenden mobilen Arbeitsmaschine (60) ist und die Absaugeinrichtung (42) zumindest eine in eine Absaugleitung (51) integrierte Hydraulikpumpe (52) umfasst, deren Eingangswelle (53) über eine Getriebestufe (54) mit der Abtriebswelle (55) der Hydraulikmotoranordnung (34) mechanisch gekoppelt ist.

2. Hydraulisches System nach Anspruch 1,
**dadurch gekennzeichnet,**
**dass** die Hydraulikmotoranordnung (34) über eine Luftansaugleitung (47) mit einer in den Hydraulikflüssigkeitsspeicher (44) integrierten Luftansaugeinrichtung (48) verbunden ist.

3. Hydraulisches System nach Anspruch 2,
**dadurch gekennzeichnet,**
**dass** die Luftansaugeinrichtung (48) als Luftansaugrohr (49) ausgeführt und in dem Hydraulikflüssigkeitsspeicher (44) in vertikaler Richtung geneigt positioniert ist.

4. Hydraulisches System nach einem der vorhergehenden Ansprüche,
**dadurch gekennzeichnet,**
**dass** die Luftansaugleitung (47) ein Rückschlagventil (50) umfasst, dessen Durchlass in Abhängigkeit von einem definierten Unterdruck (Δp) in der Hydraulikmotoranordnung (34) freigegeben wird.

5. Hydraulisches System nach Anspruch 4,
**dadurch gekennzeichnet,**
**dass** das Rückschlagventil (50) unter Federvorspannung steht und einen Öffnungsdruck von bis zu 1 bar, vorzugsweise 0,6 bar erfordert.

6. Hydraulisches System nach einem der Ansprüche 1 bis 5,
**dadurch gekennzeichnet,**
**dass** die Hydraulikpumpe (52) in der Weise in die Absaugleitung (42) integriert ist, dass der Zu- und Ablaufseite (56) der Hydraulikpumpe (52) jeweils ein Rückschlagventil (57, 58) zugeordnet ist, wobei die Rückschlagventile (57, 58) in Parallelschaltung mit einem Wechselventil (59) verbunden sind und das Wechselventil (59) den Zugang zum Hydraulikflüssigkeitsspeicher (44) freigibt oder verschließt.

7. Hydraulisches System nach einem der Ansprüche 1 bis 6,
**dadurch gekennzeichnet,**
**dass** die Absaugleitung (51) mit einem in den Hydraulikflüssigkeitsspeicher (44) integrierten Auslassrohr (61) gekoppelt ist und wobei das Auslassrohr (61) in dem Hydraulikflüssigkeitsspeicher (44) in vertikaler Richtung geneigt angeordnet ist.

8. Hydraulisches System nach Anspruch 7,
**dadurch gekennzeichnet,**
**dass** das Auslassrohr (61) Öffnungen (62) zum Durchtritt der Hydraulikflüssigkeit (43) und obenseitig eine Luftaustrittsöffnung (63) aufweist.

9. Hydraulisches System nach einem der vorhergehenden Ansprüche,
**dadurch gekennzeichnet,**
**dass** der Absaugleitung (51) im Bereich zwischen Hydraulikmotoranordnung (34) und Hydraulikpumpe (52) der Absaugeinrichtung (42) eine Filtereinrichtung (64) zugeordnet ist.

10. Hydraulisches System nach einem der vorhergehenden Ansprüche,
**dadurch gekennzeichnet,**
**dass** der Hydraulikflüssigkeitsspeicher (44) geschlossen ausgeführt ist und eine Luftaus- und -eintrittsöffnung (65) umfasst.

11. Hydraulisches System nach einem der vorangehenden Ansprüche,
**dadurch gekennzeichnet,**
**dass** die mobile Arbeitsmaschine (60) zumindest einen längenveränderlichen Hubarm (5) aufweist, wobei der längenveränderliche Hubarm (5) in einer Tragstruktur (4) über zumindest einen Hubzylinder (9) schwenkbeweglich abgestützt wird und die Tragstruktur (4) über wenigstens ein Frontfahrwerk (15) und zumindest ein Heckfahrwerk (17) verfügt und wobei das Frontfahrwerk (15) und das Heckfahrwerk (17) über einen Antriebsstrang (31) miteinander gekoppelt sind und die Tragstruktur (4) weiterhin zumindest einen Antriebsmotor (13) und wenigstens ein Zentralgetriebe (25) aufnimmt und der zumindest eine Antriebsmotor (13) und das wenigstens eine Zentralgetriebe (25) in Längsrichtung (18) des Verladefahrzeugs (1,2) gestaffelt zueinander angeordnet sind, der Antriebsmotor (13) und eine diesem zugeordnete Fahrpumpe (37) eine gemeinsame Antriebseinheit (41) bilden und sich diese Antriebseinheit (41) zumindest teilweise über den Antriebsstrang (31) erstreckt und das Zentralgetriebe (25) in der Weise in den Antriebsstrang (31) integriert ist, dass es diesen zumindest teilweise überdeckt.

12. Hydraulisches System nach Anspruch 11,
**dadurch gekennzeichnet,**
**dass** die mobile Arbeitsmaschine (60) als Teleskoplader (2), Gabelstapler oder Radlader ausgebildet ist.

13. Verwendung eines hydraulischen Systems nach einem der Ansprüche 1 bis 12 in einer mobilen Arbeitsmaschine (60), zumindest umfassend einen längenveränderlichen Hubarm (5) und wobei der Hubarm (5) in einer Tragstruktur (4) über zumindest einen Hubzylinder (9) schwenkbeweglich abgestützt wird und die Tragstruktur (4) über wenigstens ein Frontfahrwerk (15) und zumindest ein Heckfahrwerk (17) verfügt und wobei das Frontfahrwerk (15) und das Heckfahrwerk (17) über einen Antriebsstrang (31) miteinander gekoppelt sind und die Tragstruktur (4) weiterhin zumindest einen Antriebsmotor (13) und wenigstens ein Zentralgetriebe (25) aufnimmt.

14. Verwendung nach Anspruch 13, **dadurch gekennzeichnet, dass** die mobile Arbeitsmaschine (60) ein Verladefahrzeug (1) oder Traktor ist.

## Claims

1. A hydraulic system comprising a bleeding device for bleeding a hydraulic fluid (43) from the hydraulic system, wherein the hydraulic system comprises at least one hydraulic motor arrangement (34) of a mobile working machine (60) and a hydraulic fluid tank (44) which is hydraulically coupled to said hydraulic motor arrangement (34),
**characterized in that**
a suction device (42) for sucking up the hydraulic fluid (43) is associated with the at least one hydraulic motor arrangement (34) in a manner such that the suction device (42) carries hydraulic fluid (43) away from the hydraulic motor arrangement (34) into the hydraulic fluid tank (44) by means of an underpressure (Δp), and wherein sucking up of the hydraulic fluid (43) by means of the underpressure (Δp) is independent of the direction of rotation of the hydraulic motor arrangement (34) and therefore independent of the direction of travel of the mobile working machine (60) comprising the hydraulic motor arrangement (34) and the suction device (42) comprises at least one hydraulic pump (52) integrated into a suction line (51) the input shaft (53) of which is coupled to the output shaft (55) of the hydraulic motor arrangement (34) via a gear stage transmission (54).

2. The hydraulic system according to claim 1,
**characterized in that**
the hydraulic motor arrangement (34) is connected via an air intake line (47) to an air intake device (48) which is integrated into the hydraulic fluid tank (44).

3. The hydraulic system according to claim 2,
**characterized in that**
the air intake device (48) is configured as an air intake pipe (49) and is in a position in the hydraulic fluid tank (44) that is inclined to the vertical direction.

4. The hydraulic system according to one of the preceding claims,
**characterized in that**
the air intake line (47) comprises a non-return valve (50) the opening of which is a function of a defined underpressure (Δp) in the hydraulic motor arrangement (34).

5. The hydraulic system according to claim 4,
**characterized in that**
the non-return valve (50) is spring pre-loaded and requires an opening pressure of up to 1 bar, preferably 0.6 bar.

6. The hydraulic system according to one of claims 1 to 5,
**characterized in that**
the hydraulic pump (52) is integrated into the suction line (42) in a manner such that a respective non-return valve (57, 58) is associated with the supply and delivery side (56) of the hydraulic pump (52), wherein the non-return valves (57, 58) are connected in parallel to a shuttle valve (59) and the shuttle valve (59) opens or closes the access to the hydraulic fluid tank (44).

7. The hydraulic system according to one of claims 1 to 6,
**characterized in that**
the suction line (51) is coupled to an outlet pipe (61) integrated into the hydraulic fluid tank (44) and wherein the outlet pipe (61) is inclined to the vertical direction in the hydraulic fluid tank (44).

8. The hydraulic system according to claim 7,
**characterized in that**
the outlet pipe (61) has openings (62) for the passage of hydraulic fluid (43) and has an air discharge opening (63) at the top.

9. The hydraulic system according to one of the preceding claims,
**characterized in that**
in the region between the hydraulic motor arrangement (34) and the hydraulic pump (52) of the suction device (42), a filter device (64) is associated with the suction line (51).

10. The hydraulic system according to one of the preceding claims,
**characterized in that**
the hydraulic fluid tank (44) is closed in design and comprises an air outlet and inlet opening (65).

11. The hydraulic system according to one of the preceding claims,
**characterized in that**
the mobile working machine (60) has at least one variable length lifting arm (5), wherein the variable length lifting arm (5) is pivotably movably supported in a support structure (4) via at least one lifting cylinder (9) and the support structure (4) is provided with at least one front chassis (15) and at least one rear chassis (17) and wherein the front chassis (15) and the rear chassis (17) are coupled together via a drive train (31) and the support structure (4) furthermore accommodates at least one propulsion engine (13) and at least one central transmission (25) and the at least one propulsion engine (13) and the at least one central transmission (25) are staggered with respect to each other in the longitudinal direction (18) of the loading vehicle (1, 2), the drive motor (13) and a drive pump (37) associated therewith forming a common drive unit (41) and at least part of said drive unit (41) extends over the drive train (31) and the central transmission (25) is integrated into the drive train (31) in a manner such that the former at least partially overlaps the latter.

12. The hydraulic system according to claim 11,
**characterized in that**
the mobile working machine (60) is configured as a telescopic loader (2), a forklift or a wheel loader.

13. Use of a hydraulic system according to one of claims 1 to 12 in a mobile working machine (60), comprising at least one variable length lifting arm (5) and wherein the lifting arm (5) is pivotably and movably supported in a support structure (4) via at least one lifting cylinder (9) and the support structure (4) is provided with at least one front chassis (15) and at least one rear chassis (17) and wherein the front chassis (15) and the rear chassis (17) are coupled together via a drive train (31) and the support structure (4) furthermore accommodates at least one drive motor (13) and at least one central transmission (25).

14. Use according to claim 13, **characterized in that** the mobile working machine (60) is a loading vehicle (1) or tractor.

## Revendications

1. Système hydraulique, incluant un dispositif de purge d'air pour purger l'air d'un liquide hydraulique (43) hors du système hydraulique, le système hydraulique incluant au moins un agencement de moteur hydraulique (34) d'une machine de travail mobile (60) et un réservoir de liquide hydraulique (44) couplé hydrauliquement à cet agencement de moteur hydraulique (34), **caractérisé en ce qu'**au au moins un agencement de moteur hydraulique (34) est associé un équipement d'aspiration (42) pour aspirer le liquide hydraulique (43) de façon que l'équipement d'aspiration (42) transfère du liquide hydraulique (43) de l'agencement de moteur hydraulique (34) au réservoir de liquide hydraulique (44) au moyen d'une pression négative (Δp), et l'aspiration du liquide hydraulique (43) au moyen d'une pression négative (Δp) étant indépendante du sens de rotation de l'agencement de moteur hydraulique (34) et donc indépendante du sens de la marche de la machine de travail mobile (60) incluant l'agencement de moteur hydraulique (34), et l'équipement d'aspiration (42) incluant au moins une pompe hydraulique (52) qui est intégrée à une conduite d'aspiration (51) et dont l'arbre d'entrée (53) est couplé mécaniquement à l'arbre de sortie (55) de l'agencement de moteur hydraulique (34) par l'intermédiaire d'un étage de transmission (54).

2. Système hydraulique selon la revendication 1, **caractérisé en ce que** l'agencement de moteur hydraulique (34) est relié par l'intermédiaire d'une conduite d'aspiration d'air (47) à un équipement d'aspiration d'air (48) intégré au réservoir de liquide hydraulique (44)

3. Système hydraulique selon la revendication 2, **caractérisé en ce que** l'agencement d'aspiration d'air (48) est conformé en tuyau d'aspiration d'air (49) et positionné dans le réservoir de liquide hydraulique (44) de façon inclinée dans la direction verticale.

4. Système hydraulique selon une des revendications précédentes, **caractérisé en ce que** la conduite d'aspiration d'air (47) inclut une valve anti-retour (50) dont le passage est libéré en fonction d'une pression négative définie (Δp) dans l'agencement de moteur hydraulique (34).

5. Système hydraulique selon la revendication 4, **caractérisé en ce que** la valve anti-retour (50) est soumise à une précontrainte élastique et exige une pression d'ouverture de jusqu'à 1 bar, de préférence 0,6 bar.

6. Système hydraulique selon une des revendications précédentes 1 à 5, **caractérisé en ce que** la pompe hydraulique (52) est intégrée dans la conduite d'aspiration (42) de façon qu'au côté flux d'entrée et de sortie (56) de la pompe hydraulique (52) soit associée respectivement une valve anti-retour (57, 58), les valves anti-retour (57, 58) étant reliées en montage en parallèle à une valve à deux voies (59) et la valve à deux voies (59) libérant ou fermant l'accès au réservoir de liquide hydraulique (44).

7. Système hydraulique selon une des revendications 1 à 6, **caractérisé en ce que** la conduite d'aspiration (51) est couplée à un tuyau de sortie (61) intégré au réservoir de liquide hydraulique (44), et le tuyau de sortie (61) étant disposé dans le réservoir de liquide hydraulique (44) de manière inclinée dans la direction verticale.

8. Système hydraulique selon la revendication 7, **caractérisé en ce que** le tuyau de sortie (61) comporte des ouvertures (62) pour le passage du liquide hydraulique (43) et, sur le dessus, une ouverture de sortie d'air (63).

9. Système hydraulique selon une des revendications précédentes, **caractérisé en ce qu'**à la conduite d'aspiration (51) est associé un équipement de filtration (64) dans la zone entre l'agencement de moteur hydraulique (34) et la pompe hydraulique (52).

10. Système hydraulique selon une des revendications précédentes, **caractérisé en ce que** le réservoir de liquide hydraulique (44) est conçu sous forme fermée et inclut une ouverture de sortie et d'entrée d'air (65).

11. Système hydraulique selon une des revendications précédentes, **caractérisé en ce que** la machine de travail mobile (60) comprend au moins un bras de levage à longueur variable (5), le bras de levage à longueur variable (5) prenant appui avec une possibilité de pivotement dans une structure porteuse (4) par l'intermédiaire d'au moins un vérin hydraulique (9), et la structure porteuse (4) disposant d'au moins un train de roulement avant (15) et d'au moins un train de roulement arrière (17), et le train de roulement avant (15) et le train de roulement arrière (17) étant couplés l'un à l'autre par l'intermédiaire d'une chaîne de transmission (31), et la structure porteuse (4) abritant en outre un moteur d'entraînement (13) et au moins une transmission centrale (25), et le au moins un moteur d'entraînement (13) et la au moins une transmission centrale (25) étant disposés l'un par rapport à l'autre de manière étagée dans la direction longitudinale (18) du véhicule de chargement (1, 2), le moteur d'entraînement (13) et une pompe de marche (37) associée à celui-ci formant une unité d'entraînement commune (41), et cette unité d'entraînement (41) s'étendant au moins en partie au-delà de la chaîne de transmission (31), et la transmission centrale (25) étant intégrée à la chaîne de transmission (31) de façon à la recouvrir au moins en partie.

12. Système hydraulique selon la revendication 11, **caractérisé en ce que** la machine de travail mobile (60) est conformée en chargeur télescopique (2), en chariot élévateur à fourche ou en chargeur à pneus.

13. Utilisation d'un système hydraulique selon une des revendications 1 à 12 dans une machine de travail mobile (60), incluant au moins un bras de levage à longueur variable (5), et le bras de levage (5) prenant appui avec une possibilité de pivotement dans une structure porteuse (4) par l'intermédiaire d'au moins un vérin hydraulique (9), et la structure porteuse (4) disposant d'au moins un train de roulement avant (15) et d'au moins un train de roulement arrière (17), et le train de roulement avant (15) et le train de roulement arrière (17) étant couplés l'un à l'autre par l'intermédiaire d'une chaîne de transmission (31), et la structure porteuse (4) abritant en outre un moteur d'entraînement (13) et au moins une transmission centrale (25).

14. Utilisation selon la revendication 13, **caractérisé en ce que** la machine de travail mobile (60) est un véhicule de chargement (1) ou un tracteur.
